# EUROPEAN PATENT APPLICATION

(11) **EP 0 916 986 A1**
(43) Date of publication of application: **19.05.1999**
(21) Application number: 98203814.3
(22) Date of filing: 12.11.1998
(51) Int. Cl.: G02B 27/22, G03B 35/00

(54) **Three-dimensional image projector**

(30) Priority: 14.11.1997 IT MI972527
(71) Applicant: Toptel Limited, Dublin 4 (IE)
(72) Inventor: Villani, Sergio, 51017 Pescia PT (IT)
(74) Representative: Arena, Giovanni

(57) **Abstract**

According to a first solution the projector comprises a chamber (1) containing the object whose image is to be projected, a front lens occupying an aperture in one wall of the chamber, made up of two or three single lenses (4), of which at least one of the Fresnel type, having a diameter between 30 and 60 cm, resulting dioptric power between 2 and 5 diopters and presenting between the single lenses a distance between 6 and 8 cm in case of three single lenses and between 8 and 20 cm in case of two single lenses.

According to a second solution the projector comprises a chamber to contain the object (22) whose image is to be projected, an aperture in the front wall of the chamber, a concave spherical mirror located in the chamber in a position opposite the above mentioned aperture in such a manner that its center of curvature falls at the side of the aperture, said object being placed near the optical axis passing through said center of curvature and perpendicular to the front wall of the chamber, and being located on the opposite side of the aperture with respect to the optical axis in such a manner that its distance from the concave mirror as measured along the optical axis is greater than r/2 and less than 3·r/4 where r is the radius of curvature of the mirror.

## Description

This invention relates to a three-dimensional image viewing projector.

At present the reproduction of stereoscopic images of an object is performed by means of more or less complex systems based essentially on the use of two different plane images of the same object and appropriate means such as for example prisms, gratings made up of aligned cylinders or eyeglasses with polarized lenses which allow reservation of the view of each one of the two images to the corresponding eye, or based on the use of reprojected holograms.

These systems call for refined and costly technology, create disturbance when viewing is prolonged, do not allow viewing from several perspective points and the images display a considerable chromatic degradation.

Another solution described in patent EP 410 968 calls for a device for projecting a three-dimensional image in the space in front. This device comprises a chamber with hyporeflecting walls containing the object whose image it is desired to reproduce, a lens occupying an aperture in a wall of the chamber with the optical axis of the lens aligned with the object, some light sources located in the chamber to illuminate the object screened with respect to the lens, and an optical circuit between the object and the lens provided by means of one or more mirror pairs. This solution reduces many drawbacks of the previous systems but still displays some disadvantages because the chamber is rather cumbersome and the image quality is poor.

In addition all the known instruments are rather poor as refers in the dynamic field of vision. Indeed, the observer is forced to remain in the direction of the optical axis of the lens or the lens-mirror system if he wants to perceive the image of the object because after a few degrees of lateral displacement the image disappears from the field.

The purpose of the present invention is to make available a three-dimensional image projector displaying small volume, broad field of vision and good image quality. In a first solution the projector in accordance with the present invention contemplates for this purpose the following components:
- a chamber having opaque dark non-reflecting walls to contain the object whose image is to be projected;
- a front lens occupying an aperture in one wall of the chamber with this lens having a diameter greater than the greatest dimension of the object whose image is to be projected and displaying a focal distance smaller than the length of the optical circuit going from the object to the lens;
- one or more light sources located in the chamber for illumination of the object and appropriately screened from the lens so as not to project diffusion light thereon,
and is characterized in that the front lens is made up of two or three single lenses of which at least one of the Fresnel type, having a diameter between 30 and 60 cm, resulting dioptric power between 2 and 5 diopters and presenting between the single lenses a distance between 6 and 8 cm in case of three single lenses and between 8 and 20 cm in case of two single lenses.

In accordance with a second inventive solution the projector calls for the following components:
- a chamber to contain the object whose image is to be projected;
- an aperture in the front wall of the chamber;
- a concave spherical mirror located in the chamber in a position opposite the above aperture in such a manner that its center of curvature falls at the side of the aperture;
- the object whose image is to be projected placed near the optical axis passing through the center of curvature of the mirror and perpendicular to the front wall of the chamber with said object located with respect to the optical axis on the opposite side of the aperture in such a manner that its distance from the concave mirror as measured along the optical axis is greater than r/2 and less than 3·r/4 where r is the radius of curvature of the mirror,
- one or more light sources with spectral emission near that of the solar spectrum and located in the chamber for illumination of the object whose image is to be projected and appropriately screened so as not to project parasite lights onto the mirror and the aperture in the front wall of the chamber.

The characteristics and advantages of the invention are set forth in the description of an embodiment thereof given below by way of non-limiting example with reference to the annexed drawings, whose figures show:
- Fig.1:: a diagrammatic view of a vertical cross section of a first embodiment of the projector in accordance with the present invention,
- Fig.2:: a horizontal cross section view of the projector of Fig. 1,
- Fig.3:: a diagrammatic view of a vertical cross section of a second embodiment of the projector in accordance with the present invention,
- Fig.4:: a perspective view of the projector of Fig. 3, and
- Fig.5:: a cross section view of a variant of the projector of Fig. 3.

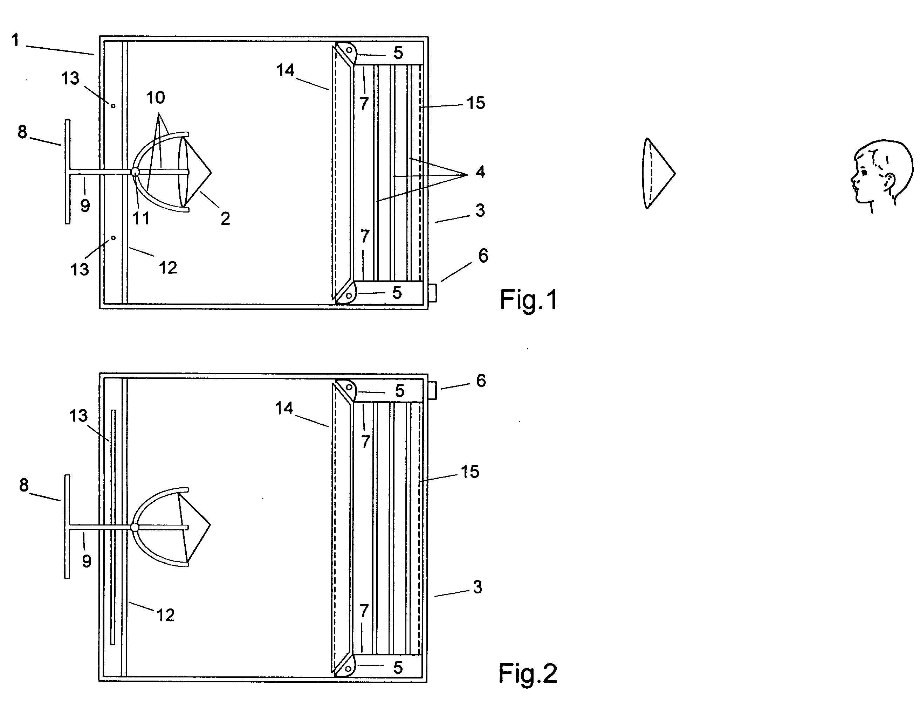

Figs.1 and 2 show diagrammatically a first example of an embodiment of the projector in accordance with the present invention.

More specifically Fig.1 shows a vertical cross section view thereof and Fig.2 a horizontal cross section view. This projector comprises:
- a chamber 1 in box form with volume approximately equal to that of a common television receiver and having a transparent front wall 3 and the other walls opaque, dark and hyporeflecting for containment of the object 2 whose image is to be projected;
- a lens consisting of a group of two or three single lenses having a diameter between 30 and 60 cm, of which at least one is the Fresnel type, placed behind the front wall 3 (three Fresnel type lenses 4 are shown in the figure);
- small spot lights 5 with lamps having adjustable luminous intensity (controlled for example by a knob 6 located on the front of the chamber 1 or by an automatic control circuit which as a function of the output signal of a photoelectric cell placed on the front panel of the projector controls illumination of the object as a function of the luminosity of the environment) to ensure that the illumination of the object is always greater than the luminosity of the environment;
- screens 7 placed beside the spot lights 5 to prevent projection of parasite lights onto the lenses 4;
- a translucid background wall 12 provided on its back with its own illumination sources 13;
- a device 8 for positioning the object within the chamber 1 and comprising a rod 9 traversing the back wall of the projector and the wall 12 through the center of those walls and capable of translations and rotations around its own axis and comprising arms 10 of transparent material hinged at 11 and stressed by elastic means (not shown) to press against the object 2 so as to retain it and allow its positioning within the chamber in the most suitable position;
- color screens 14 placed in front of the spot lights 5 to project on the object narrow band light obtained with appropriate mixing of the three primary luminous radiations corresponding to red, green and blue as defined by the Commission International Eclairage (C.I.E.);
- a possible color screen 15 placed at the level of the lens system in addition or as an alternative to the screens 14 and possibly paired with a polaroid plate.

The distance between the single lenses of the optical system is between 6 and 8 cm for three single lenses and between 8 and 20 cm for two single lenses while the dioptric power of the lenses is selected in such a manner that the dioptric power of the resulting compound lens is between 2 and 5 diopters with the higher values being preferred because they allow a smaller viewer chamber volume, larger enlargement capability even at limited image distances with respect to the lens and a greater dynamic observation field, that is to say the possibility for the observer of greater deviation from the optical axis of the lens still allowing viewing of the image.

Taking as an example a compound lens with +4 diopters, to obtain an image of the object at one meter therefrom the object itself would be placed at 33 cm behind the lens.

With a lens having +2 diopters to have the image still at one meter from the lens the object would have to be placed behind it at a distance of one meter.

The capability to produce considerable enlargements at shorter image distances also results in the capability of enhancement of the three-dimensional image effect linked to the fact that longitudinal enlargement (i.e. in the direction of the optical axis) is equal to the square of the transverse enlargement of the image.

The above mentioned choice of the distance between the single lenses has the effect of a considerable reduction of the spherical and chromatic aberrations which are very disturbing in optical systems and in single lenses. In particular thanks to the above mentioned lens spacing the transverse chromatic aberration is reduced by approximately 20%.

A further reduction of this aberration is obtained from the effect of the color screens which are selected in such a manner as to enhance the object image as depending on its coloring. An appropriate choice of the background color as a function of the coloring of the object can also contribute to enhancing the contrast between the object and the background and the three-dimensional effect of the observed image.

The polaroid plate is used if it is desired to minimize the light reflections on the surfaces (unmetallized) of the object, and this is done by appropriately directing the object and/or the plate.

The first embodiment described above was indicated by way of non-limiting example and numerous modifications, adaptations, variations, omissions and substitutions of members with others functionally equivalent can be made thereto without going beyond the scope of the claims set forth below.

One of these variations could concern the color screens. Indeed, they could be incorporated in the bulb of the lamps of the spot lights 5. In this case several spot lights with different lamp coloring (e.g. with lamps colored according to the three basic colors red, green and blue) could be provided along each wall and illumination of the object with the most appropriate coloration light could be provided in a simple manner by providing the possibility of separate and selective lighting of the individual spot lights which, being powered through rheostats, could be made to vary in light emission to provide the multiple useful chromatic combinations contemplated by use of the three primary luminous radiations R-G-B (red-green-blue) as defined by the C.I.E.

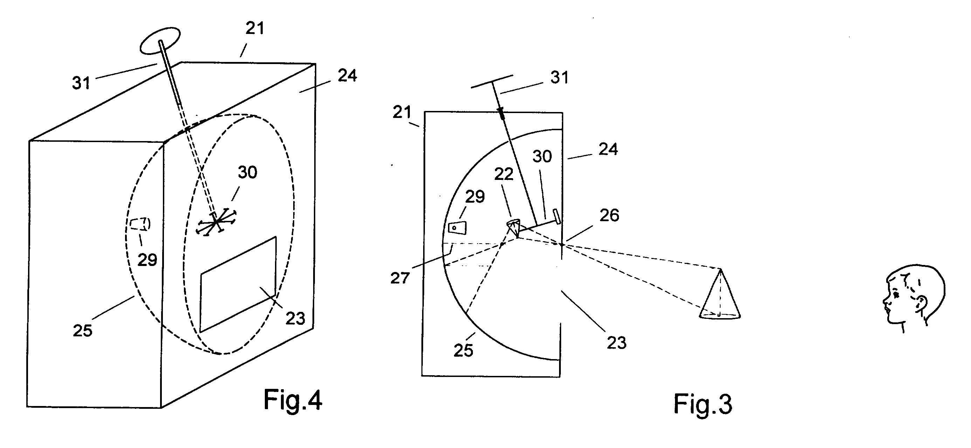

Figs. 3 and 4 show diagrammatically a second embodiment of the projector in accordance with the present invention.

Specifically Fig.3 shows a vertical cross section view thereof and Fig. 4 a perspective view thereof.

This projector comprises the following:
- a chamber 21 for containment of the object 22 to be projected;
- an aperture 23 in a front wall 24 of the chamber;
- a concave spherical mirror 25 placed inside the chamber in a position opposite the above mentioned aperture 23 and positioned in such a manner that its center of curvature 26 falls at the side of the aperture 23 approximately on a center line plane of the aperture;
- the object 22 whose image is to be projected placed near the optical axis 27 passing through the center of curvature 26 and perpendicular to the front wall of the chamber with said object being positioned with respect to the optical axis on the opposite side of the aperture and in such a manner that its distance from the concave mirror measured along the optical axis is greater than r/2 and less than 3·r/4 where r is the radius of curvature of the mirror;
- one or more light sources 29 with spectral emission near that of the solar spectrum and located within the chamber for illumination of the object to be projected and appropriately screened so as to not project parasite lights on the mirror and the aperture in the front wall of the chamber.

In addition to reduced volume the last-described embodiment displays the advantage that the particular positioning station chosen for the object to be projected allows considerable reduction of spherical aberration introduced by the mirror. It also lends itself in a very simple manner to projecting images of several objets in sequence.

It is possible to arrange within the chamber a small wheel or platform 30 fastened at the end to a rotating shaft 31 having its axis inclined with respect to the optical axis and positioned in such a manner that the edge of the wheel at its lowest level is located at the above mentioned positioning station.

It is thus possible to fix along the edge of the wheel a series of uniformly spaced objects whose projection in succession could be obtained by rotating the shaft 31 in such a manner as to bring these objects into the positioning station in succession.

As a result, if this number of objects is not greater than 8 (and thus if their angular distance is not less than 45°) no masking of the objects placed outside the positioning station is necessary because the observer standing in front of the aperture 23 perceives only the image of the object located in the above mentioned station.

Only with a greater number of objects is the above mentioned masking necessary and it is obtainable for example with a hood in a fixed position with opaque, dark and hyporeflecting walls, covering all the objects with the exception of the one placed in the above mentioned station.

Even in the last described embodiment indicated by way of non-limiting example numerous modifications, adaptations, variations, omissions and substitutions of members by others functionally equivalent can be made without going beyond the protective scope of the claims set forth below.

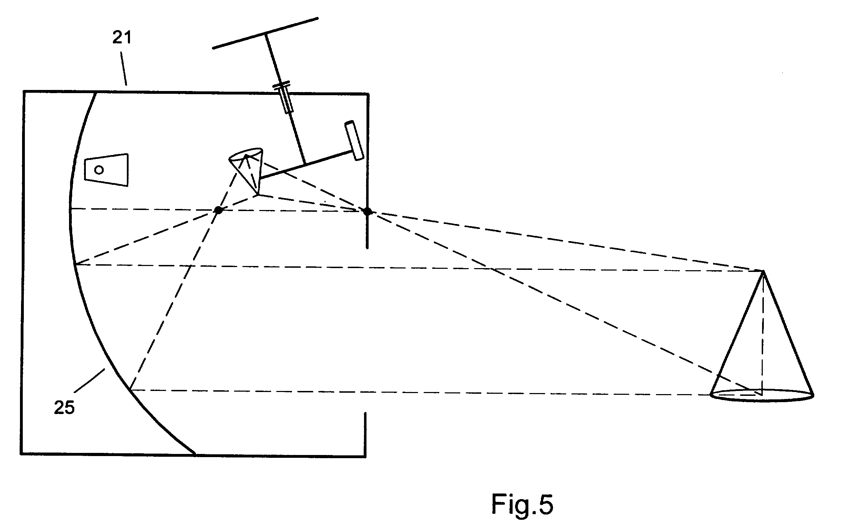

One of said variations could concern the form and volume of the chamber 21 and the spherical mirror. Indeed the part of the spherical mirror involved in reflection is the part behind the aperture 23 and therefore the chamber of Fig. 3 could be so reduced in height as to contain only the part of the mirror involved in reflection and the wheel 30 as shown in Fig. 5.

It is also clear that the aperture 23 instead of being positioned under the center 26 (as in Fig. 3) could be positioned above, to the right or to the left of the above mentioned center without thereby compromising the operation of the projector.

## Claims

1. A three-dimensional image viewing projector with which it is possible to form externally and make visible in front thereof the three-dimensional image of an object, comprising:
- a chamber having opaque, dark and non-reflecting walls to contain the object whose image is to be projected;
- a front lens occupying an aperture in one wall of the chamber with this lens having a diameter greater than the greatest dimension of the object whose image is to be projected and displaying a focal distance smaller than the length of the optical circuit going from the object to the lens; and
- one or more light sources located in the chamber for illumination of the object and appropriately screened from the lens so as not to project diffusion light thereon,
characterized in that the front lens is made up of two or three single lenses, of which at least one of the Fresnel type, having a diameter between 30 and 60 cm, resulting dioptric power between 2 and 5 diopters and presenting between the single lenses a distance between 6 and 8 cm in case of three single lenses and between 8 and 20 cm in case of two single lenses.

2. Projector in accordance with claim 1 characterized by the presence of a color screen place at the single lens system level.

3. Projector in accordance with claim 1 characterized by the presence of a polaroid plate placed at the single lens system level.

4. Projector in accordance with claim 1 characterized in that the light sources project narrow band light obtained with various mixings of the three primary light radiations R, G and B as defined by the C.I.E. (Commission International Eclairage).

5. Projector in accordance with claim 4 characterized in that the light sources can be grouped in three groups of sources projecting respectively the above mentioned primary light radiations R, G and B and that the three groups can be activated selectively so as to produce the most appropriate color combination from time to time.

6. Three-dimensional image viewing projector with which it is possible to form externally and make visible in front thereof the three-dimensional image of an object and comprising:
- a chamber to contain the object whose image is to be projected;
- an aperture in the front wall of the chamber;
- a concave spherical mirror located in the chamber in a position opposite the above mentioned aperture in such a manner that its center of curvature falls at the side of the aperture;
- the object whose image is to be projected placed near the optical axis passing through said center of curvature and perpendicular to the front wall of the chamber with said object being located on the opposite side of the aperture with respect to the optical axis in such a manner that its distance from the concave mirror as measured along the optical axis is greater than r/2 and less than 3·r/4 where r is the radius of curvature of the mirror, said position of the object being called hereinafter 'positioning station'; and
- one or more light sources located in the chamber for illumination of the object whose image is to be projected and appropriately screened so as not to project parasite lights onto the mirror and the aperture in the front wall of the chamber.

7. Projector in accordance with claim 6 characterized in that the light sources have spectral emission near that of the solar spectrum.

8. Projector in accordance with claim 6 characterized by the presence in the chamber of a wheel or a circular platform bearing along its edge various objects to be projected and fixed to the end of a rotating shaft having its axis inclined with respect to the optical axis and positioned in such a manner that the edge of the wheel at its lowest level is located at the above mentioned positioning station.
